# EUROPEAN PATENT APPLICATION

(11) **EP 4 636 136 A1**
(43) Date of publication of application: **22.10.2025**
(21) Application number: 23942042.5
(22) Date of filing: 20.07.2023
(51) Int. Cl.: C25D 1/04

(54) **ELECTROLYTIC METHOD FOR PREPARING MICROPOROUS COPPER FOIL**

(30) Priority: 21.06.2023 CN 202310735778
(71) Applicant: Jiujiang Defu Technology Co., Ltd, Jiujiang, Jiangxi 332005 (CN)
(72) Inventor: DONG, Chaolong, Jiujiang, Jiangxi 332005 (CN); JIANG, Yang, Jiujiang, Jiangxi 332005 (CN); GE, Hongxin, Jiujiang, Jiangxi 332005 (CN); HE, Botong, Jiujiang, Jiangxi 332005 (CN); FAN, Xiaotao, Jiujiang, Jiangxi 332005 (CN); WU, Ying, Jiujiang, Jiangxi 332005 (CN)
(74) Representative: Canzler & Bergmeier Patentanwälte Partnerschaft mbB
(86) International application number: PCT/CN2023/108345
(87) International publication number: WO 2024/259774

(57) **Abstract**

An electrolytic method for preparing a microporous copper foil, comprising the following steps: according to process proportions, adding a copper raw material, together with sulfuric acid and deionized water, into a copper dissolving tank for mixing; introducing stream so that copper is oxidized and reacts with the sulfuric acid to generate a copper sulfate solution; filtering the copper sulfate solution to obtain a copper sulfate electrolyte; and adding the copper sulfate electrolyte into an electrolyte tank. By preparing the copper sulfate electrolyte and adding a required copper foil additive into the copper sulfate electrolyte, a microporous copper foil having uniform and evenly-distributed micropores and a bright foil surface is obtained.

## Description

### Background of the Present Disclosure

### FIELD OF DISCLOSURE

The present disclosure relates to the technical field of electrolytic copper foil production, in particular, to an electrolytic deposition method for manufacturing a microporous copper foil.

### DESCRIPTION OF RELATED ARTS

Lithium-ion batteries are widely used in fields like new energy vehicle power batteries, 3C digital products, and energy storage systems due to their advantages such as high energy density, long cycle life, and low self-discharge. As the lithium-ion batteries serve as the preferred power for new energy vehicles, producing lithium-ion batteries with higher safety, higher energy density, and lower costs is of great significance for the development of the new energy vehicle industry.

Improving the safety and energy density of the lithium-ion batteries has always been a goal for battery manufacturers. The lithium-ion batteries include materials such as the negative electrode, the positive electrode, the separator, the electrolyte, etc. For the copper foil functioning as a negative current collector, in addition to making it thinner, making it microporous also provides an important development direction for reducing the weight of the copper foil.

The microporous copper foil is a foil material with micron-sized micropores, which is lighter in weight compared to foil materials of the same thickness and without micropores. In addition, the microporous copper foil can increase the contact area between the positive and negative electrode materials and the foil material and enhance material adhesion, thereby better preventing powder detachment and material shedding, reducing electrode contact resistance, and improving power density. The micropores enhance the bonding strength between the copper foil and the electrode material, leading to improved battery safety. Moreover, the micropores reduce the amount of the binder required, thereby increasing areal density and specific energy. Furthermore, the micropores improve the wettability of the electrolyte in the battery. Therefore, the microporous copper foil is suitable for a wide range of applications, including all-solid-state secondary batteries, polymer secondary batteries, lithium-ion capacitors, and the like.

Current methods for making microporous copper foils include a copper foil perforation method, an oxidative etching method, and an electrolytic deposition method. The perforation method involves performing mechanical perforation or laser perforation on the original copper foil substrate. The oxidative etching method involves oxidizing the alloy cathode body to form a certain oxide film, depositing a copper layer on the oxide film via electrolysis, and forming the microporous copper foil due to that the conductivity of the oxide layer is non-uniform and copper particles deposit unevenly. The perforation method results in high production costs and may leave burrs at the edge of the pore. In the oxidative etching method, the oxide film changes over time, making it difficult to control the pore size and porosity. The electrolytic deposition method involves pre-treating and masking the cathode substrate, and depositing the microporous copper foil on the cathode substrate via the current. This method supports continuous production and effective control over the pore size and porosity.

However, in the production of the microporous copper foil using the electrolytic deposition method, since the substrate surface is pre-treated and shielded, abnormalities may occur during the electroforming process if key parameters are not well controlled, such as improper concentration of cupric ions in the electrolyte, temperature exceeding the allowable range, or additives failing to meet performance requirements. These abnormalities include copper deposition at the pore walls of the microporous copper foil, micropore deformation, pore closure, and color differences in the microporous copper foil. Moreover, if a low level of the copper ion deposits around the micropore edge, the tensile strength of the microporous copper foil may be insufficient, while if excessive copper ion deposits on the micropore walls of the microporous copper foil, adhesion between the titanium roller surface and the copper foil may be strong, making separation difficult and resulting in copper foil edge tearing, which negatively impacts production.

Currently, there is no effective solution to the above problems.

### SUMMARY OF THE PRESENT DISCLOSURE

The present disclosure provides an electrolytic deposition method for manufacturing a microporous copper foil. In the method of the present disclosure, a copper sulfate electrolyte is first prepared, and a required copper foil additive is added to the copper sulfate electrolyte, so that microporous copper foils with consistent micropore size, uniform micropore distribution, and bright and lustrous foil surface are obtained. Moreover, the microporous regions exhibit dense crystallization and a smooth surface with high tensile strength. This can meet the application in multiple fields, including all-solid-state secondary batteries, polymer secondary batteries, lithium-ion supercapacitors, and the like.

To achieve the above technical objectives, the technical solutions of the present disclosure are as follows:

An electrolytic deposition method for manufacturing a microporous copper foil, including the following steps:
S1: adding a copper raw material with sulfuric acid and deionized water at a specific ratio to a copper dissolution tank for mixture, introducing a steam, so that copper undergoes oxidation and reacts with sulfuric acid to generate a copper sulfate solution; filtering the copper sulfate solution to obtain a copper sulfate electrolyte; and adding the copper sulfate electrolyte to an electrolyte tank, wherein the copper sulfate electrolyte has a copper ion concentration of 70-90 g/L and a sulfuric acid content of 100-120 g/L, and a temperature of the copper sulfate electrolyte upon entering a foil production machine is 50-60°C when a flow rate of the copper sulfate electrolyte is 30-50 m³/h;
S2: adding a copper foil additive specifically for the microporous copper foil to the electrolyte tank, wherein the copper foil additive includes chloride ions, a brightener, a leveling agent, and a wetting agent;
S3: performing partial masking treatment on a cathode roller for electrolytic copper foil production;
S4: transferring copper sulfate electrolyte from the electrolyte tank to the foil production machine for electrolytic copper foil production; and
S5: performing anti-oxidation treatment using a chromic anhydride aqueous solution after electrolytic copper foil production, to obtain a double-sided bright copper foil with uniform micropores.

Step S1 in the electrolytic deposition method for manufacturing the microporous copper foil of the present disclosure includes the following:
S11: adding cathode copper plates with a purity ≥99.9% and copper wires with a purity ≥99.8% at a ratio of 1:1 or 1:2 to the copper dissolution tank containing sulfuric acid, wherein a diameter of the copper wires is in a range of 3-8 mm;
S12: introducing high-temperature air using a screw blower, so that copper dissolves and the copper sulfate solution is prepared; and
S13: performing coarse filtration using a diatomite filter and performing fine filtration using a precision filter, to finally obtain the purified copper sulfate electrolyte.

Further, a method for adding the copper foil additive includes formulating the chloride ions, the brightener, the leveling agent, and the wetting agent with specific concentrations in different additive barrels or adding units, and adding one or more of the chloride ions, the brightener, the leveling agent, and the wetting agent to the copper sulfate electrolyte at specific flow rates before electrolytic copper foil production.

Further, a method for formulating the chloride ions includes adding a 36-38% hydrogen chloride solution to deionized water to obtain a hydrogen chloride aqueous solution with a concentration of 0.25-0.5%, wherein the hydrogen chloride aqueous solution has a chloride ion concentration of 15-25 mg/L.

Further, the brightener is N,N-dimethyl-dithiocarbamyl propyl sulfonic acid sodium (DPS) containing sulfur (S) and nitrogen (N), and a concentration of DPS in the copper sulfate electrolyte is in a range of 10-20 mg/L.

Further, the wetting agent is polyethylene glycol (PEG) with a molecular weight of 4000-6000, and a concentration of PEG in the copper sulfate electrolyte is in a range of 5-10 mg/L.

Further, the leveling agent includes collagen and iodine, interaction between iodine ions and collagen enhances leveling performance for the microporous copper foil, a concentration of collagen in the copper sulfate electrolyte is in a range of 8-15 mg/L, and a concentration of iodine in the copper sulfate electrolyte is in a range of 2-4 mg/L.

Further, after adding the copper foil additive to the electrolyte tank, the concentration of the copper foil additive in the copper sulfate electrolyte is determined through a cyclic voltammetry method, and the concentration of the copper foil additive is adjusted based on the determined concentration values.

Further, a method for performing partial masking treatment on the cathode roller for electrolytic copper foil production includes etching a substrate surface of the cathode roller and using a masking material to form a masked region, or pre-coating the substrate surface of the cathode roller with a highly insulating material to form the masked region.

Further, a diameter of the masked region is 100-1000 µm, a thickness of the obtained microporous copper foil is in a range of 6-12 µm, a micropore diameter of the microporous copper foil is in a range of 100-1000 µm, and a porosity of the microporous copper foil is in a range of 10%-30%.

The present disclosure has the following beneficial effects:
According to the present disclosure, a copper sulfate electrolyte is prepared, and a required copper foil additive is added to the copper sulfate electrolyte, which facilitates the formation of microporous copper foils with consistent micropore size, uniform micropore distribution, and a bright and lustrous foil surface. Microporous copper foils with a pore size ranging from 100 to 1000 µm can be manufactured, a deviation of the micropore diameter can be controlled within ±50 µm, and the pore size is adjustable according to requirements. The manufactured microporous copper foil has a porosity of 10%-30%, uniform micropore size distribution, smooth pore walls without copper nodules, and good foil surface uniformity without noticeable color differences.

Besides, the manufactured microporous copper foil exhibits good performance, with tensile strength exceeding 300 MPa, which is more than 50% higher than the 200 MPa tensile strength of microporous copper foils obtained through conventional processes, thus better meeting the requirements of all-solid-state lithium-ion secondary batteries, polymer lithium-ion batteries, and supercapacitors.

Moreover, compared to conventional electrolyte processes, less copper ion content and a lower electrolyte flow rate are needed in the present disclosure, so that copper deposition in the electrolyte system and pipelines is alleviated, and manufacturing costs are reduced.

In addition, the additives specialized for the microporous copper foil provide stronger leveling effects and better defect suppression capabilities. This improves foil surface quality while reducing the required additive and costs. The method of the present disclosure is simple to operate and maintains high production stability over long-term production.

### BRIEF DESCRIPTION OF THE DRAWINGS

To more clearly illustrate the embodiments of the present disclosure or the technical solutions in the prior art, the following briefly introduces the accompanying drawings required for the embodiments. Obviously, the accompanying drawings in the following description are merely some embodiments of the present disclosure. For a person of ordinary skill in the art, other drawings can also be obtained according to the accompanying drawings without creative effort.
Fig. 1 is a flowchart of an electrolytic deposition method for manufacturing a microporous copper foil according to an embodiment of the present disclosure.
Fig. 2 is a schematic structural diagram of an apparatus for the electrolytic deposition method for manufacturing the microporous copper foil according to an embodiment of the present disclosure.
Fig. 3 is a diagram showing scanning electron microscope (SEM) morphologies of microporous copper foils prepared by the electrolytic deposition method for manufacturing the microporous copper foil according to an embodiment of the present disclosure, in which the left, middle, and right images show micropore morphologies magnified 100X and represent Grade 1, 2, and 3 morphologies of the microporous copper foils, respectively.

### Reference Numerals

1. Copper dissolution tank;
2. Electrolyte tank;
3. Foil production machine;
4. Anti-oxidation treatment tank;
5. Additive A barrel;
6. Additive B barrel;
7. Additive C barrel;
8. Additive D barrel.

### DETAILED DESCRIPTION OF THE PREFERRED EMBODIMENTS

The following clearly and completely describes the technical solutions in the embodiments of the present disclosure with reference to the accompanying drawings in the embodiments of the present disclosure. Obviously, the described embodiments are only a part of the embodiments of the present disclosure, rather than all of the embodiments. Based on the embodiments of the present disclosure, all other embodiments obtained by a person of ordinary skill in the art shall fall within the protection scope of the present disclosure.

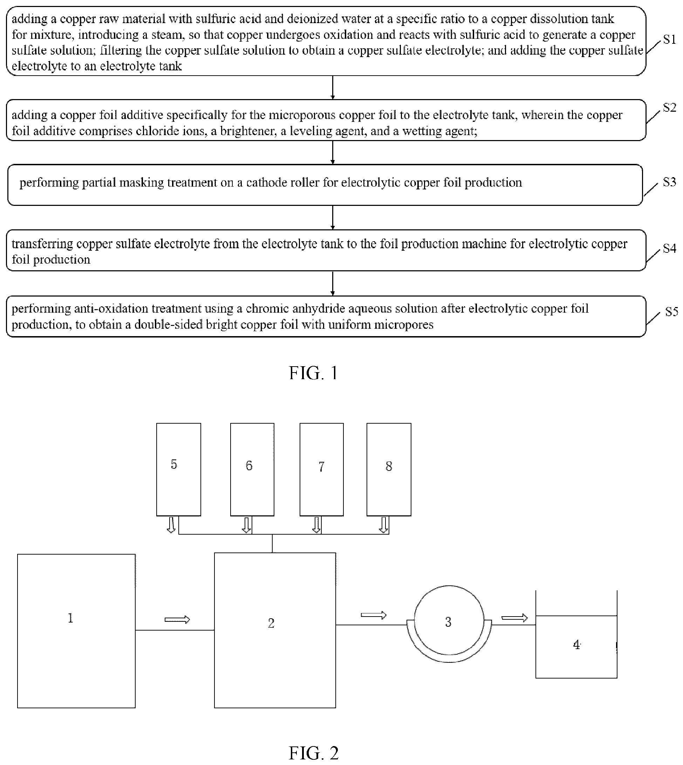

As shown in Figs. 1-2, an electrolytic deposition method for manufacturing a microporous copper foil according to an embodiment of the present disclosure is provided, the method includes the following steps:
1): adding a copper raw material, such as copper plates and copper wires, with sulfuric acid and deionized water at a specific ratio to a copper dissolution tank for mixture, and introducing a steam, so that copper undergoes oxidation and reacts with sulfuric acid to generate a copper sulfate aqueous solution;
2): adding a copper foil additive specifically for a microporous copper foil to the electrolyte tank, wherein the additive includes multiple components collectively added to an electrolyte system;
3): performing partial masking treatment on a cathode roller for electrolytic copper foil production;
4): transferring copper sulfate from the electrolyte tank to a foil production machine for electrolytic copper foil production; and
5): performing anti-oxidation treatment using a chromic anhydride aqueous solution after electrolytic copper foil production, to obtain a double-sided bright copper foil with uniform micropores.

In step 1), cathode copper plates with a purity ≥99.9% and copper wires with a purity ≥99.8% at a ratio of 1:1 or 1:2 are added to the copper dissolution tank containing sulfuric acid. High-temperature air is introduced using a screw blower, so that copper dissolves and the copper sulfate solution is obtained. Coarse filtration is performed using a diatomite filter and then fine filtration is performed using a precision filter, to finally obtain a purified electrolyte (i.e., purified copper sulfate solution).

In step 1), the copper sulfate electrolyte has a copper ion concentration of 70-90 g/L and a sulfuric acid content of 100-120 g/L, and a temperature of the electrolyte upon entering the foil production machine is 50-60°C when a flow rate of the copper sulfate electrolyte is 30-50 m³/h.

In step 2), core additive components for electrolytic copper foil are added to the electrolyte after filtration, where the additive includes multiple components collectively added to the electrolyte system.

In step 2), a method for adding the additive includes formulating chloride ions, a brightener, a leveling agent, a wetting agent, and the like with specific concentrations in different additive barrels, and adding the chloride ions, the brightener, the leveling agent, the wetting agent, and the like to the copper sulfate electrolyte at specific flow rates.

The chloride ions are prepared by adding a 36-38% hydrogen chloride solution to deionized water to formulate a hydrogen chloride aqueous solution with a concentration of 0.25-0.5%.

The hydrogen chloride aqueous solution is added to the copper sulfate electrolyte to provide chloride ions as a copper foil additive. The chloride ions act as cathode depolarizers and promote copper deposition during the electrodeposition process, improving the morphology of the micropore edge of the copper foil and making the pore wall structure denser.

The additive for the microporous copper foil in step 2) also includes the brightener, the wetting agent, and the leveling agent.

The brightener is DPS (N,N-dimethyl-dithiocarbamyl propyl sulfonic acid sodium) containing S and N, which replaces the conventional additive SPS (bis-(sodium sulfopropyl)-disulfide) because DPS features the performance of both the brightener and the leveling agent and can inhibit defects at the pores of the microporous copper foil. DPS in the electrolyte after addition has a concentration in a range of 10-20 mg/L.

The wetting agent is high-molecular-weight PEG, which can block the diffusion of copper ions near the cathode, thereby inhibiting copper ion reduction and finally making the microporous copper foil more dispersed and flat. Its molecular weight is in a range of 4000-6000, and its concentration in the electrolyte after addition is in a range of 5-10 mg/L.

The leveling agent is an additive including collagen and iodine. The interaction between iodine ions and collagen enhances leveling performance for the microporous copper foil while reducing the required amount of collagen.

For the collagen-iodine additive, a concentration of collagen in the electrolyte after addition is in a range of 8-15 mg/L, and a concentration of iodine in the electrolyte after addition is in a range of 2-4 mg/L.

After the additive, including the chloride ions, the brightener, the leveling agent, and the wetting agent, is added to the electrolyte tank, concentrations of different additive components in the electrolyte are determined through a cyclic voltammetry method, and then the concentrations of different additives may be adjusted based on determined concentration values.

Step 3) is performing partial masking treatment on the cathode roller for electrolytic foil production, and a masking method includes etching a masked region on a substrate surface of the cathode roller, or pre-coating a substrate surface of the cathode roller with a highly insulating material to form a masked region.

A diameter of the masked region on the substrate surface is in a range of 100-1000 µm. A micropore diameter of the copper foil obtained through electrolysis is in a range of 100-1000 µm, and a porosity of the copper foil is in a range of 10%-30%.

Step 4) includes transferring the copper sulfate electrolyte to the foil production machine for electrolytic foil production, wherein the current density for electrolytic foil production of the foil production machine is in a range of 40-60 A/dm²; and performing anti-oxidation treatment using a chromic anhydride aqueous solution or a silane coupling agent after electrolytic foil production, to obtain a double-sided bright microporous copper foil with uniform micropores, wherein a thickness of the microporous copper foil is in a range of 6-12 µm.

To facilitate understanding of the above technical solutions of the present disclosure, the following describes in detail the above technical solutions of the present disclosure through specific implementations.

In specific implementations, the electrolytic deposition method for manufacturing the microporous copper foil according to the present disclosure is as follows:

Example 1: Cathode copper plates with a purity ≥99.9% and copper wires with a purity ≥99.8% at a ratio of 1:2 are added to a copper dissolution tank 1 containing sulfuric acid. High-temperature air is introduced using a screw blower, so that copper dissolves and a copper sulfate solution is prepared. The copper sulfate solution undergoes multi-stage filtration and enters an electrolyte tank 2 for storage. Additives are added to the electrolyte tank 2, wherein in the electrolyte tank 2, the copper ion concentration is 90 g/L and the sulfuric acid content is 110 g/L. The electrolyte is delivered to a foil production machine 3 at a flow rate of 50 m³/h and a temperature of 55°C to produce 8 µm microporous copper foils, wherein the current density for foil production is 55 A/dm². After foil production, the foils enter an anti-oxidation liquid treatment tank 4, and finally microporous copper foils are obtained.

For the additives added to the electrolyte storage tank 2, an additive A barrel 5 contains a hydrogen chloride aqueous solution with a concentration of 0.5%, which achieves a chloride ion concentration of 20 mg/L after being added into the electrolyte tank 2; an additive B barrel 6 contains the brightener DPS, which achieves a brightener concentration of 15 mg/L after being added into the electrolyte tank 2; an additive C barrel 7 contains the wetting agent PEG, which achieves a concentration of 7.5 mg/L after being added into the electrolyte tank 2; and an additive D barrel 8 contains the leveling agent collagen, which achieves a concentration of 8 mg/L after being added into the electrolyte tank 2.

Four rolls of 1000-meter microporous copper foil are produced in batches, and samples are taken for testing. The average micropore diameter of the copper foil is 145 µm, with a porosity of 16%. The copper foil is rough, with minor copper deposition on pore walls. After baking at 150°C for 10 minutes, the measured average tensile strength is 267 MPa, and the average elongation is 1.8%.

Example 2: Cathode copper plates with a purity ≥99.9% and copper wires with a purity ≥99.8% at a ratio of 1:2 are added to a copper dissolution tank 1 containing sulfuric acid. High-temperature air is introduced using a screw blower, so that copper dissolves and a copper sulfate solution is prepared. The copper sulfate solution undergoes multi-stage filtration and enters an electrolyte tank 2 for storage. Additives are added to the electrolyte tank 2, wherein in the electrolyte tank 2, the copper ion concentration is 80 g/L and the sulfuric acid content is 110 g/L. The electrolyte is delivered to a foil production machine 3 at a flow rate of 40 m³/h and a temperature of 55°C to produce 8 µm microporous copper foils, wherein the current density for foil production is 55 A/dm². After foil production, the foils enter an anti-oxidation liquid treatment tank 4, and finally microporous copper foils are obtained.

For the additives added to the electrolyte storage tank 2, an additive A barrel 5 contains a hydrogen chloride aqueous solution with a concentration of 0.5%, which achieves a chloride ion concentration of 20 mg/L after being added into the electrolyte tank 2; an additive B barrel 6 contains the brightener DPS, which achieves a brightener concentration of 15 mg/L after being added into the electrolyte tank 2; an additive C barrel 7 contains the wetting agent PEG, which achieves a concentration of 5 mg/L after being added into the electrolyte tank 2; and an additive D barrel 8 contains the leveling agent collagen, which achieves a concentration of 8 mg/L after being added into the electrolyte tank 2.

Four rolls of 1000-meter microporous copper foil are produced in batches, and samples are taken for testing. The average micropore diameter of the copper foil is 151 µm, with a porosity of 17%. The micropore is rough, with minor copper deposition on pore walls. After baking at 150°C for 10 minutes, the measured average tensile strength is 272 MPa, and the average elongation is 1.7%.

Example 3: Cathode copper plates with a purity ≥99.9% and copper wires with a purity ≥99.8% at a ratio of 1:2 are added to a copper dissolution tank 1 containing sulfuric acid. High-temperature air is introduced using a screw blower, so that copper dissolves and a copper sulfate solution is prepared. The copper sulfate solution undergoes multi-stage filtration and enters an electrolyte tank 2 for storage. Additives are added to the electrolyte tank 2, wherein in the electrolyte tank 2, the copper ion concentration is 80 g/L and the sulfuric acid content is 110 g/L. The electrolyte is delivered to a foil production machine 3 at a flow rate of 40 m³/h and a temperature of 55°C to produce 8 µm microporous copper foils, wherein the current density for foil production is 55 A/dm². After foil production, the foils enter an anti-oxidation liquid treatment tank 4, and finally microporous copper foils are obtained.

For the additives added to the electrolyte storage tank 2, an additive A barrel 5 contains a hydrogen chloride aqueous solution with a concentration of 0.5%, which achieves a chloride ion concentration of 22 mg/L after being added into the electrolyte tank 2; an additive B barrel 6 contains the brightener DPS, which achieves a brightener concentration of 17 mg/L after being added into the electrolyte tank 2; an additive C barrel 7 contains the wetting agent PEG, which achieves a concentration of 5 mg/L after being added into the electrolyte tank 2; and an additive D barrel 8 contains the leveling agent collagen, which achieves a concentration of 8 mg/L after being added into the electrolyte tank 2.

Four rolls of 1000-meter microporous copper foil are produced in batches, and samples are taken for testing. The average micropore diameter of the copper foil is 166 µm, with a porosity of 19%. The micropore is slightly rough, with minor copper deposition on pore walls. After baking at 150°C for 10 minutes, the measured average tensile strength is 285 MPa, and the average elongation is 1.7%.

Example 4: Cathode copper plates with a purity ≥99.9% and copper wires with a purity ≥99.8% at a ratio of 1:2 are added to a copper dissolution tank 1 containing sulfuric acid. High-temperature air is introduced using a screw blower, so that copper dissolves and a copper sulfate solution is prepared. The copper sulfate solution undergoes multi-stage filtration and enters an electrolyte tank 2 for storage. Additives are added to the electrolyte tank 2, wherein in the electrolyte tank 2, the copper ion concentration is 80 g/L and the sulfuric acid content is 110 g/L. The electrolyte is delivered to a foil production machine 3 at a flow rate of 40 m³/h and a temperature of 55°C to produce 8 µm microporous copper foils, wherein the current density for foil production is 55 A/dm². After foil production, the foils enter an anti-oxidation liquid treatment tank 4, and finally microporous copper foils are obtained.

For the additives added to the electrolyte storage tank 2, an additive A barrel 5 contains a hydrogen chloride aqueous solution with a concentration of 0.5%, which achieves a chloride ion concentration of 22 mg/L after being added into the electrolyte tank 2; an additive B barrel 6 contains the brightener DPS, which achieves a brightener concentration of 17 mg/L after being added into the electrolyte tank 2; an additive C barrel 7 contains the wetting agent PEG, which achieves a concentration of 5 mg/L after being added into the electrolyte tank 2; an additive D barrel 8 contains the leveling agent collagen, which achieves a concentration of 11.5 mg/L after being added into the electrolyte tank 2; and an additive F barrel 9 (not shown in Fig. 2) contains the leveling agent iodine, which achieves a concentration of 2 mg/L after being added into the electrolyte tank 2.

Four rolls of 100- meter microporous copper foil are produced in batches, and samples are taken for testing. The average micropore diameter of the copper foil is 203 µm, with a porosity of 24%. The micropore morphology is uniform, with smooth pore walls. After baking at 150°C for 10 minutes, the measured average tensile strength is 326 MPa, and the average elongation is 1.9%.

Example 5: Cathode copper plates with a purity ≥99.9% and copper wires with a purity ≥99.8% at a ratio of 1:2 are added to a copper dissolution tank 1 containing sulfuric acid. High-temperature air is introduced using a screw blower, so that copper dissolves and a copper sulfate solution is prepared. The copper sulfate solution undergoes multi-stage filtration and enters an electrolyte tank 2 for storage. Additives are added to the electrolyte tank 2, wherein in the electrolyte tank 2, the copper ion concentration is 80 g/L and the sulfuric acid content is 110 g/L. The electrolyte is delivered to a foil production machine 3 at a flow rate of 40 m³/h and a temperature of 55°C to produce 8 µm microporous copper foils, wherein the current density for foil production is 55 A/dm². After foil production, the foils enter an anti-oxidation liquid treatment tank 4, and finally microporous copper foils are obtained.

For the additives added to the electrolyte storage tank 2, an additive A barrel 5 contains a hydrogen chloride aqueous solution with a concentration of 0.5%, which achieves a chloride ion concentration of 22 mg/L after being added into the electrolyte tank 2; an additive B barrel 6 contains the brightener DPS, which achieves a brightener concentration of 17 mg/L after being added into the electrolyte tank 2; an additive C barrel 7 contains the wetting agent PEG, which achieves a concentration of 5 mg/L after being added into the electrolyte tank 2; an additive D barrel 8 contains the leveling agent collagen, which achieves a concentration of 15 mg/L after being added into the electrolyte tank 2; and an additive F barrel 9 (not shown in Fig. 2) contains the leveling agent iodine, which achieves a concentration of 4 mg/L after being added into the electrolyte tank 2.

Four rolls of 1000-meter microporous copper foil are produced in batches, and samples are taken for testing. The average micropore diameter of the copper foil is 180 µm, with a porosity of 21%. The microporous copper foil is slightly rough, with less smooth pore walls. After baking at 150°C for 10 minutes, the measured average tensile strength is 319 MPa, and the average elongation is 1.7%.

Comparative example 1: Cathode copper plates with a purity ≥99.9% and copper wires with a purity ≥99.8% at a ratio of 1:2 are added to a copper dissolution tank 1 containing sulfuric acid. High-temperature air is introduced using a screw blower, so that copper dissolves and a copper sulfate solution is prepared. The copper sulfate solution undergoes multi-stage filtration and enters an electrolyte tank 2 for storage. Additives are added to the electrolyte tank 2, wherein in the electrolyte tank 2, the copper ion concentration is 90 g/L and the sulfuric acid content is 110 g/L. The electrolyte is delivered to a foil production machine 3 at a flow rate of 45 m³/h and a temperature of 55°C to produce 8 µm microporous copper foils, wherein the current density for foil production is 55 A/dm². After foil production, the foils enter an anti-oxidation liquid treatment tank 4, and finally microporous copper foils are obtained.

For the additives added to the electrolyte storage tank 2, an additive A barrel 5 contains a hydrogen chloride aqueous solution with a concentration of 0.5%, which achieves a chloride ion concentration of 20 mg/L after being added into the electrolyte tank 2; an additive B barrel 6 contains the brightener SPS, which achieves a concentration of 15 mg/L after being added into the electrolyte tank 2; an additive C barrel 7 contains the wetting agent PEG, which achieves a concentration of 5 mg/L after being added into the electrolyte tank 2; and an additive D barrel 8 contains the leveling agent collagen, which achieves a concentration of 10 mg/L after being added into the electrolyte tank 2.

Four rolls of 1000-meter microporous copper foil are produced in batches, and samples are taken for testing. The average micropore diameter of the copper foil is 89 µm, with a porosity of 13%. A large amount of copper deposits on micropore walls. After baking at 150°C for 10 minutes, the measured average tensile strength is 213 MPa, and the average elongation is 1.4%.

Comparative example 2: Cathode copper plates with a purity ≥99.9% and copper wires with a purity ≥99.8% at a ratio of 1:2 are added to a copper dissolution tank 1 containing sulfuric acid. High-temperature air is introduced using a screw blower, so that copper dissolves and a copper sulfate solution is prepared. The copper sulfate solution undergoes multi-stage filtration and enters an electrolyte tank 2 for storage. Additives are added to the electrolyte tank 2, wherein in the electrolyte tank 2, the copper ion concentration is 90 g/L and the sulfuric acid content is 110 g/L. The electrolyte is delivered to a foil production machine 3 at a flow rate of 45 m³/h and a temperature of 55°C to produce 8 µm microporous copper foils, wherein the current density for foil production is 55 A/dm². After foil production, the foils enter an anti-oxidation liquid treatment tank 4, and finally microporous copper foils are obtained.

For the additives added to the electrolyte storage tank 2, an additive A barrel 5 contains a hydrogen chloride aqueous solution with a concentration of 0.5%, which achieves a chloride ion concentration of 22 mg/L after being added into the electrolyte tank 2; an additive B barrel 6 contains the brightener SPS, which achieves a concentration of 20 mg/L after being added into the electrolyte tank 2; an additive C barrel 7 contains the wetting agent PEG, which achieves a concentration of 5 mg/L after being added into the electrolyte tank 2; and an additive D barrel 8 contains the leveling agent collagen, which achieves a concentration of 15 mg/L after being added into the electrolyte tank 2.

Four rolls of 1000-meter microporous copper foil are produced in batches, and samples are taken for testing. The average micropore diameter of the copper foil is 93 µm, with a porosity of 14%. A large amount of copper deposits on micropore walls. After baking at 150°C for 10 minutes, the measured average tensile strength is 218 MPa, and the average elongation is 1.5%.

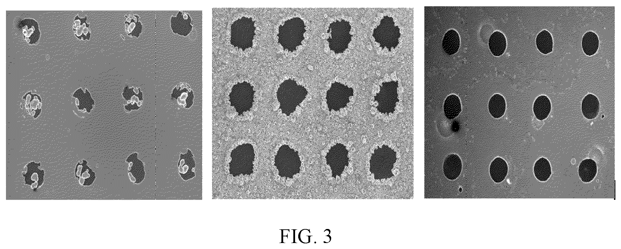

Performance and appearance tests are conducted on the manufactured microporous copper foils in the examples and comparative examples, and results are summarized in Table 1. SEM of microporous copper foils at different grades is shown in Fig. 3.

**Table 1: Summary of results of Examples**

| Item | Micropore diameter (µm) | Porosity | Tensile strength (MPa) | Micropore morphology |
|---|---|---|---|---|
| Example 1 | 145 | 16% | 267 | Grade 2 morphology, slightly rough micropore walls with minor copper deposition |
| Example 2 | 151 | 17% | 272 | Grade 2 morphology, rough copper foil with copper deposition on pore walls |
| Example 3 | 166 | 19% | 285 | Grade 2 morphology, moderately rough copper foil with minor copper deposition on pore walls |
| Example 4 | 203 | 24% | 326 | Grade 3 morphology, uniform micropore size distribution and smooth pore walls without copper nodules |
| Example 5 | 180 | 21% | 319 | Grade 3 morphology, uniform micropore size distribution, smooth pore walls without copper nodules, and with faint electroplating stripes on the copper foil surface |
| Comparative example 1 | 89 | 13% | 213 | Grade 1 morphology, coarse copper foil grains with a large amount of copper depositing on pore walls |
| Comparative example 2 | 93 | 14% | 218 | Grade 1 morphology, coarse copper foil grains with a large amount of copper depositing on pore walls |

In summary, by adopting the above electrolyte process, microporous copper foils having uniform micropore size distribution and smooth pore walls without copper nodules can be obtained. The manufactured copper foil has high tensile strength and an ideal porosity.

According to the present disclosure, a copper sulfate electrolyte is prepared, and required copper foil additives are added to the copper sulfate electrolyte to facilitate the formation of microporous copper foils with consistent micropore size, uniform micropore distribution, and a bright and lustrous foil surface. Microporous copper foils with a pore size ranging from 100 to 1000 µm can be manufactured, a deviation of the micropore diameter can be controlled within ±50 µm, and the pore size is adjustable according to requirements. The manufactured microporous copper foil has a porosity of 10%-30%, uniform micropore size distribution, smooth pore walls without copper nodules, and good foil surface uniformity without noticeable color differences. Furthermore, the manufactured microporous copper foil exhibits good performance, with tensile strength exceeding 300 MPa, which is more than 50% higher than the 200 MPa tensile strength of microporous copper foils obtained through conventional processes, thus better meeting the requirements of all-solid-state lithium-ion secondary batteries, polymer lithium-ion batteries, and supercapacitors. Additionally, compared to conventional electrolyte processes, less copper ion content and a lower electrolyte flow rate are needed in the present disclosure, so that copper deposition in the electrolyte system and pipelines is alleviated, and manufacturing costs are reduced. Moreover, the additives specialized for the microporous copper foil provide stronger leveling effects and better defect suppression capabilities. This improves foil surface quality while reducing the required additives and costs. The method of the present disclosure is simple to operate and maintains high production stability over long-term production.

The above description merely includes preferred embodiments of the present disclosure and is not intended to limit the present disclosure. Any modifications, equivalent replacements, or improvements made within the spirit and principles of the present disclosure shall be included within the scope of protection of the present disclosure.

## Claims

1. An electrolytic deposition method for manufacturing a microporous copper foil, comprising the following steps:
S1: adding a copper raw material with sulfuric acid and deionized water at a specific ratio to a copper dissolution tank for mixture, introducing a steam, so that copper undergoes oxidation and reacts with sulfuric acid to generate a copper sulfate solution; filtering the copper sulfate solution to obtain a copper sulfate electrolyte; and adding the copper sulfate electrolyte to an electrolyte tank;
wherein the copper sulfate electrolyte has a copper ion concentration of 70-90 g/L and a sulfuric acid content of 100-120 g/L, and a temperature of the copper sulfate electrolyte upon entering a foil production machine is 50-60°C when a flow rate of the copper sulfate electrolyte is 30-50 m³/h;
S2: adding a copper foil additive specifically for the microporous copper foil to the electrolyte tank, wherein the copper foil additive comprises chloride ions, a brightener, a leveling agent, and a wetting agent;
S3: performing partial masking treatment on a cathode roller for electrolytic copper foil production;
S4: transferring copper sulfate electrolyte from the electrolyte tank to the foil production machine for electrolytic copper foil production; and
S5: performing anti-oxidation treatment using a chromic anhydride aqueous solution after electrolytic copper foil production, to obtain a double-sided bright copper foil with uniform micropores.

2. The method according to claim 1, wherein step S1 comprises one or more of the following:
S11: adding cathode copper plates with a purity ≥99.9% and copper wires with a purity ≥99.8% at a ratio of 1:1 or 1:2 to the copper dissolution tank containing sulfuric acid, wherein a diameter of the copper wires is in a range of 3-8 mm;
S12: introducing high-temperature air using a screw blower, so that copper dissolves and the copper sulfate solution is prepared; and
S13: performing coarse filtration using a diatomite filter and performing fine filtration using a precision filter, to finally obtain the copper sulfate electrolyte.

3. The method according to claim 1, wherein a method for adding the copper foil additive comprises: formulating the chloride ions, the brightener, the leveling agent, and the wetting agent with specific concentrations in different additive barrels or adding units, and adding one or more of the chloride ions, the brightener, the leveling agent, and the wetting agent to the copper sulfate electrolyte at specific flow rates before electrolytic copper foil production.

4. The method according to claim 3, wherein a method for formulating the chloride ions comprises adding a 36-38% hydrogen chloride solution to deionized water to obtain a hydrogen chloride aqueous solution with a concentration of 0.25-0.5%, wherein the hydrogen chloride aqueous solution has a chloride ion concentration of 15-25 mg/L.

5. The method according to claim 3, wherein the brightener is N,N-dimethyldithiocarbamyl propyl sulfonic acid sodium (DPS) containing sulfur (S) and nitrogen (N), and a concentration of DPS in the copper sulfate electrolyte is in a range of 10-20 mg/L.

6. The method according to claim 3, wherein the wetting agent is polyethylene glycol (PEG) with a molecular weight in a range of 4000-6000, and a concentration of PEG in the copper sulfate electrolyte is in a range of 5-10 mg/L.

7. The method according to claim 3, wherein the leveling agent comprises collagen and iodine, interaction between iodine ions and collagen enhances leveling performance for the microporous copper foil, a concentration of collagen in the copper sulfate electrolyte is in a range of 8-15 mg/L, and a concentration of iodine in the copper sulfate electrolyte after addition is in a range of 2-4 mg/L.

8. The method according to any one of claims 1-7, wherein after adding the copper foil additive to the electrolyte tank, a concentration of the copper foil additive in the copper sulfate electrolyte is determined through a cyclic voltammetry method, and the concentration of the copper foil additive is adjusted based on determined concentration values.

9. The method according to claim 1, wherein a method for performing partial masking treatment on the cathode roller for electrolytic copper foil production comprises etching a substrate surface of the cathode roller and using a masking material to form a masked region, or pre-coating the substrate surface of the cathode roller with a highly insulating material to form the masked region.

10. The method according to claim 9, wherein a diameter of the masked region is in a range of 100-1000 µm, a thickness of the obtained microporous copper foil is in a range of 6-12 µm, a micropore diameter of the microporous copper foil is in a range of 100-1000 µm, and a porosity of the microporous copper foil is in a range of 10%-30%.
